# EUROPEAN PATENT APPLICATION

(11) **EP 3 769 884 A1**
(43) Date of publication of application: **27.01.2021**
(21) Application number: 19770913.2
(22) Date of filing: 15.03.2019
(51) Int. Cl.: B23B 31/39

(54) **CHUCK CLAW REPLACEMENT HAND, CHUCK CLAW AUTOMATIC REPLACEMENT METHOD, AND CLAW AUTOMATIC REPLACEMENT SYSTEM**

(30) Priority: 19.03.2018 JP 2018051296
(71) Applicant: Howa Machinery, Ltd., Kiyosu-shi, Aichi 452-8601 (JP)
(72) Inventor: NAGAOSA Hiroshi, Kiyosu-shi, Aichi 452-8601 (JP); KAWAWAKI Kazuya, Kiyosu-shi, Aichi 452-8601 (JP)
(74) Representative: Liesegang, Eva
(86) International application number: PCT/JP2019/010805
(87) International publication number: WO 2019/181779

(57) **Abstract**

A hand for exchanging claws of a chuck is configured to be fitted to a transfer device so as to attach and detach a claw to and from a fitting groove provided in the chuck of a machine tool. The hand for exchanging claws includes: a hand part capable of grasping the claw; and a compliance device that fits the hand part to the transfer device, and allows relative displacement between the transfer device and the hand part.

## Description

### TECHNICAL FIELD

The present invention relates to: a hand for exchanging claws of a chuck, which automatically exchanges claws of a chuck used in a machine tool, a method for automatically exchanging claws of a chuck, and a system for automatically exchanging claws.

### BACKGROUND ART

In a chuck used in a machine tool, a plurality of claws for grasping workpiece are prepared depending on shapes and sizes of workpiece. When a claw needs to be exchanged depending on a workpiece, the claw is automatically exchanged for another one by a claw exchange apparatus. As such a claw exchange apparatus, for example, Patent Document 1 discloses a technique of a robot hand which exchanges claws between a cassette of a machine tool and a stocker holding a plurality of chuck claws, and between the cassette indexed at a claw exchange position and a chuck.

In addition, Citation 2 discloses a technique of an automatic exchange system in which a nut runner hand and a jaw hand are selectively mounted on a distal end of a robot arm, a jaw tool is mounted on a tool spindle, and the robot arm and the tool spindle cooperate with each other to exchange claws.

Patent Document 1: JPH6-99303A
Patent Document 2: JP4955522B

### DISCLOSURE OF THE INVENTION

When a robot arm is used as a transfer device as in the conventional technique, although a claw can be transferred to a fitting groove formed in a chuck at the shortest distance, a high degree of accuracy is required in order to accurately position the claw in an inlet of an fitting groove and to move the claw. However, in an actual operation, when displacement occurs by change in temperature and/or lowering of repeat accuracy of each device, interference may occur when a claw is inserted into the fitting groove so that it may be difficult to insert the claw thereto.

Thus, the object of the present invention is to provide a hand for exchanging claws of a chuck, a method for automatically exchanging claws of a chuck, and a system for automatically exchanging claws, which are capable of attaching and detaching a claw in accordance with change in surrounding environment.

The present invention provides a hand for exchanging claws of a chuck, the hand for exchanging claws being fitted to a transfer device so as to attach and detach a claw to and from a fitting groove provided in the chuck of a machine tool, the hand for exchanging claws comprising:
a hand part capable of grasping the claw; and
a compliance device that fits the hand part to the transfer device, and allows relative displacement between the transfer device and the hand part.

The aforementioned hand for exchanging claws of a chuck may further comprise a claw lock confirmation device that confirms a locked/unlocked state of the claw by a lock mechanism provided on the chuck, when the claw is detached from the fitting groove.

In the aforementioned hand for exchanging claws of a chuck,
the lock mechanism may comprise a displacement member that is displaced depending on the locked/unlocked state of the claw, and
the claw lock confirmation device may include a sensor that detects a position of the displacement member.

In the aforementioned hand for exchanging claws of a chuck, the sensor may be of a contact type.

In addition, the present invention provides a method of automatically exchanging claws of a chuck comprising:
a step of fitting the aforementioned hand for exchanging claws to the transfer device, and
a step of attaching and detaching the claw to and from the fitting groove provided in the chuck of the machine tool.

Further, the present invention provides a system for automatically exchanging claws of a chuck, comprising:
the aforementioned hand for exchanging claws;
the chuck of the machine tool, the chuck being provided with the fitting groove; and
a transfer device to which the hand for exchanging claws is fitted, the transfer device being configured to put the claw in and out from the fitting groove;
wherein at least one of the fitting groove and the claw is provided with a guide part that guides the claw to an inlet of the fitting groove when the claw is inserted to the fitting groove.

According to the present invention, a claw can be attached and detached in accordance with change in surrounding environment.

### BRIEF DESCRIPTION OF DRAWINGS

Fig. 1 is a front view of a system for automatically changing claws of a chuck in an embodiment 1, with a hand for exchanging claws being shown from behind.
Fig. 2A is a front view showing the hand for exchanging claws in the embodiment 1.
Fig. 2B is a view showing a drive part which slides a slide part shown in Fig. 2A.
Fig. 2C is a schematic sectional view of a compliance device shown in Fig. 2A in a locked state.
Fig. 2D is a schematic sectional view of the compliance device shown in Fig. 2C in an unlocked state.
Fig. 3 is a side view showing a state in which locking/unlocking of a claw is confirmed by the hand for exchanging claws in the embodiment 1.
Fig. 4 is a side view showing a state in which the claw is grasped by the hand for exchanging claws in the embodiment 1.
Fig. 5 is a front view showing a state in which a claw to be exchanged is positioned above a fitting groove by the hand for exchanging claws in the embodiment 1, with the hand for exchanging claws being shown from behind.
Fig. 6 is side view showing a state in which the claw to be exchanged is positioned above the fitting groove by the hand for exchanging claws in the embodiment 1.
Fig. 7 is a perspective view of grasping claws in the embodiment 1.
Fig. 8A is a view for describing a state in which the claw is fitted in the inlet of the fitting groove, with a chuck main body being shown in a cross-section at a position of the fitting groove, and the hand for exchanging claws and the claw being partly omitted.
Fig. 8B is a view for describing a displacement state by a compliance device, with the chuck main body being shown in a cross-section at a position of the fitting groove, and the hand for exchanging claws and the claw being partly omitted.
Fig. 9 is a front view showing a system for automatically exchanging claws of a chuck in an embodiment 2.
Fig. 10 is a back view showing a hand for exchanging claws in the embodiment 2.
Fig. 11 is a side view showing a state in which locking/unlocking of a claw is confirmed by the hand for exchanging claws in the embodiment 2.
Fig. 12 is a side view showing a state in which the claw is grasped by the hand for exchanging claws in the embodiment 2.
Fig. 13 is a front view showing a state in which the claw to be exchanged is positioned above the fitting groove by the hand for exchanging claws in the embodiment 2.
Fig. 14 is a side view showing a state in which the claw to be exchanged is positioned above the fitting groove by the hand for exchanging claws in the embodiment 2.
Fig. 15A is a view for describing a state in which the claw is fitted in the inlet of the fitting groove, with a chuck main body being shown in a cross-section at a position of the fitting groove, and the hand for exchanging claws and the claw being partly omitted.
Fig. 15B is a view for describing a displacement state by a compliance device, with the chuck main body being shown in a cross-section at a position of the fitting groove, and the hand for exchanging claws and the claw being partly omitted.

### DESCRIPTION OF EMBODIMENTS

Embodiments of the present invention will be described herebelow with reference to the drawings.

### [Embodiment 1]

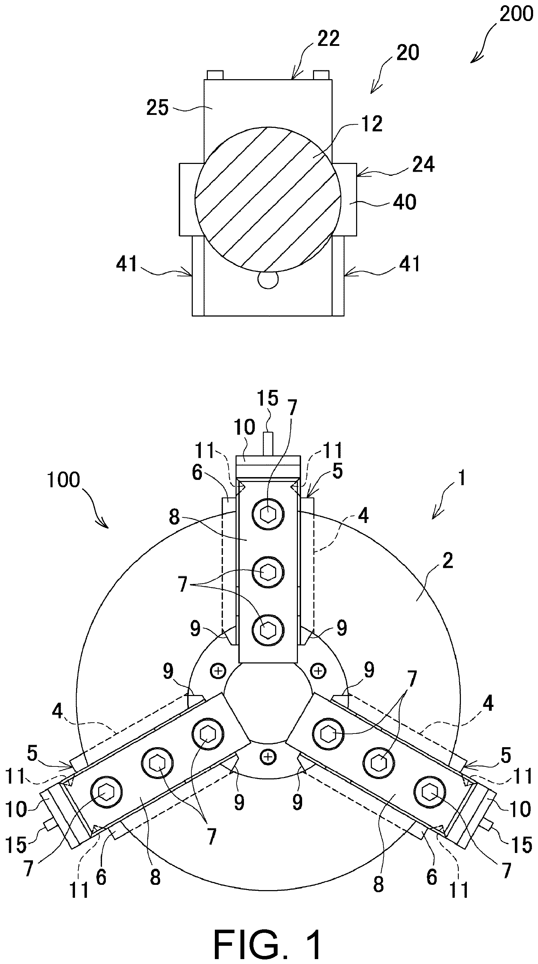

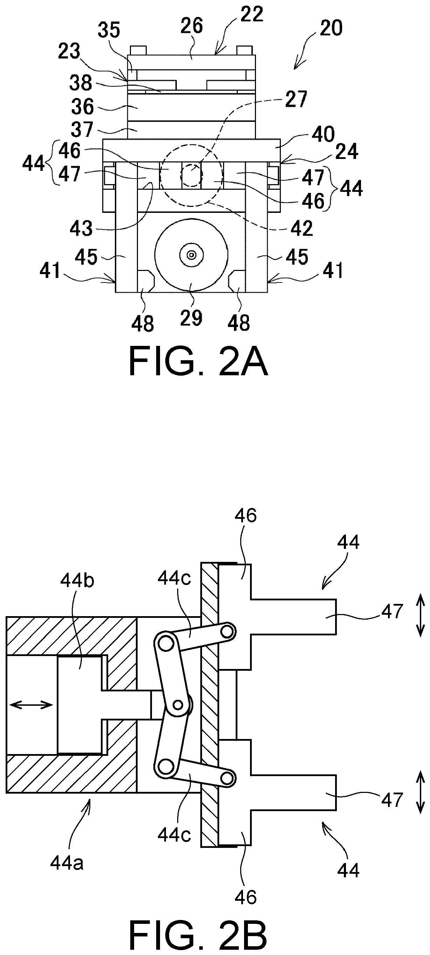

Fig. 1 is a front view of a system for automatically exchanging claws of a chuck in a machine body of a machine tool such as an NC lathe, and Fig. 2A is a front view of a hand for exchanging claws independently.

A system for automatically exchanging claws of a chuck is a system which attaches and detaches a claw to and from a fitting groove provided in a chuck of a machine tool. The system for automatically exchanging claws of a chuck 200 comprises a chuck 1 of a machine tool 100, a hand for exchanging claws 20, and a transfer device to which the hand for exchanging claws 20 is fitted.

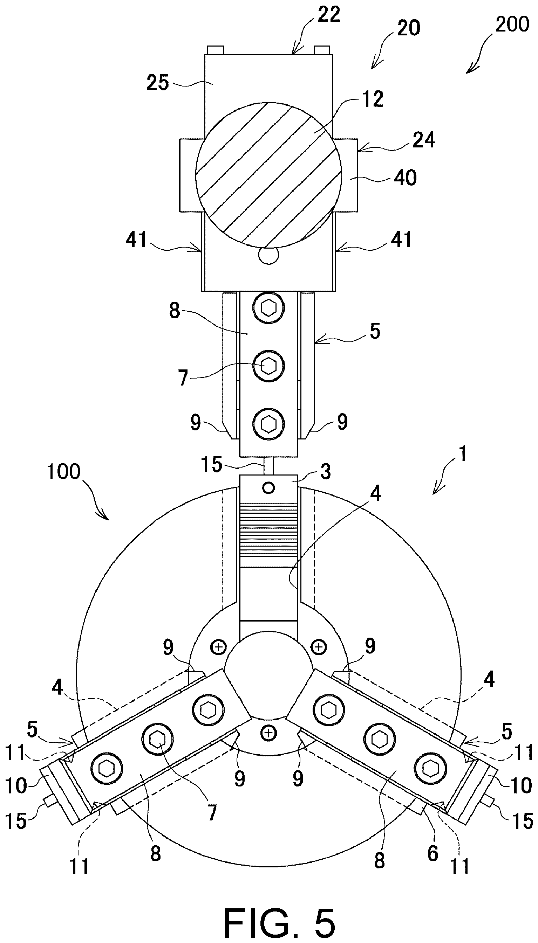

The chuck 1 has a chuck main body 2 provided on a distal end of a not-shown spindle provided in the machine body. The chuck main body 2 has a circular shape in a front view. The chuck main body 2 comprises three master jaws 3, 3 ... (only one of them is shown in Fig. 5) which are moved in a radial direction by means of a back and forth movement of a not-shown plunger provided on an axial center; three radial fitting grooves 4, 4 ... which open on a front side of the respective master jaw 3 from a front surface of the chuck main body 2 to a peripheral surface thereof, and have a convex shape in a cross-sectional view in which a rear side has a larger width than that of the front opening, and three claws 5, 5 ... fitted to the respective fitting grooves 4.

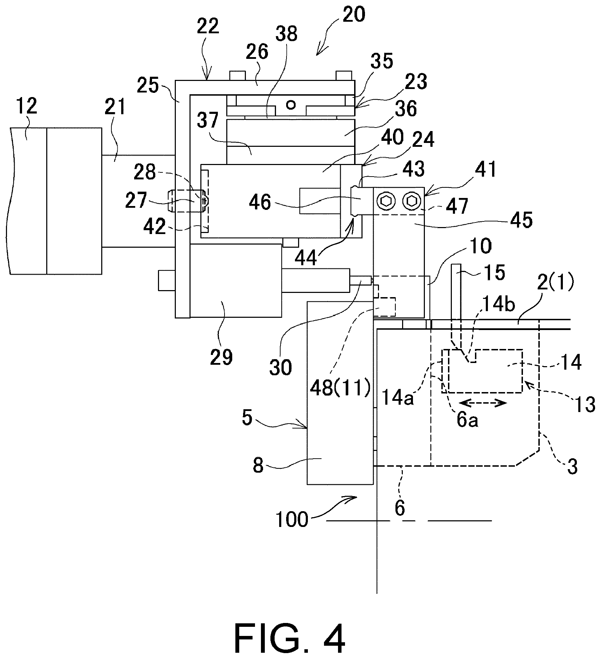

The claw 5 includes a base jaw 6 whose cross-sectional shape is the same as the fitting groove 4, and a top jaw 8 fixed on a front surface of the base jaw 6 by bolts 7, 7 .... When the base jaw 6 inserted and fitted in the fitting groove 4 is locked by a lock mechanism 13 provided in the master jaw 3, the base jaw 6 is fixed in the master jaw 3. For example, as shown in Fig. 4, the lock mechanism 13 comprises a lock member 14, and the lock member 14 has an engagement part 14a to be engaged with the base jaw 6. When locked, the lock member 14 is subjected to a force from an external device such as a robot hand or a drive part so as to be moved toward the base jaw 6, so that the engagement part 14a is engaged with a part to be engaged 6a of the base jaw 6. When unlocked, the lock member 14 is released from the aforementioned force to be moved away from the base jaw 6 so that lock member 14 is disengaged therefrom. Inclined surfaces 9, 9 serving as a guide part are formed on an end of the base jaw 6, the end being positioned on a center side of the chuck main body 2 when the base jaw 6 is inserted in the fitting groove 4. Each of the inclined surfaces 9, 9 has a width in the right and left direction, which tapers toward the end. In addition, a grasping block 10 which projects more upward than the top jaw 8 is fixed on an upper part of the base jaw 6. Recesses 11, 11 to be clamped by the hand for exchanging claws 20 described below are formed in right and left surfaces of the grasping block 10. Each of the recesses 11, 11 is tapered such that its width in the up and down direction narrows as it becomes deeper.

When the plunger is moved backward, the respective master jaws 3 are moved to the axial center side and the claws 5 are moved together therewith so as to clamp a workpiece. When the plunger is moved forward, the respective master jaws 3 are moved to an outer peripheral side so as to unclamp the workpiece.

On the other hand, the lock mechanism 13 provided on each master jaw 3 has a rod-like displacement member 15 which is displaced depending on the locked/unlocked state of the base jaw 6. The displacement member 15 projects from the chuck main body 2. As shown in the upper claw 5 in Fig. 1, in the unlocked state of the base jaw 6, the displacement member 15 is pushed upward by the lock member 14 (see Fig. 4) so as to project lengthwise outward in the radial direction of the chuck main body 2 over the grasping block 10 in a front view. On the other hand, as shown in the two lower right and left claws 5, 5 in Fig. 1, in the locked state of the base jaw 6, the displacement member 15 is received in a recess 14b of the lock member 14 so as to be retracted inward in the radial direction of the chuck main body 2 up to a position slightly over the grasping block 10 in a front view.

A robot arm 12 serving as a transfer device is used for exchanging the claws 5. The robot arm 12 is of a multi-joint type, and is composed of a plurality of arms. The hand for exchanging claws 20 is provided on a distal end of the robot arm 12. The robot arm 12 is configured to put the claw 5 grasped by a hand part 24 in and out from the fitting groove 4 provided in the chuck 1. In the description of the hand for exchanging claws 20 independently, the side of the robot arm 12 is referred to as rear side.

The hand for exchanging claws 20 is fitted to the robot arm 12 so as to be used for attaching and detaching the claw 5 to and from the fitting groove 4 provided in the chuck 1 of the machine tool 100. The hand for exchanging claws 20 comprises: a shaft part 21 fitted to the distal end of the robot arm 12 coaxially with a rotating axis of the arm distal end; a bracket 22 fitted to a front end of the shaft part 21, the bracket 22 having an inverted L-shape in a side view; a compliance device 23 fitted to the bracket 22 to face downward; and the hand part 24 fitted to the compliance device 23 and capable of grasping the claw 5.

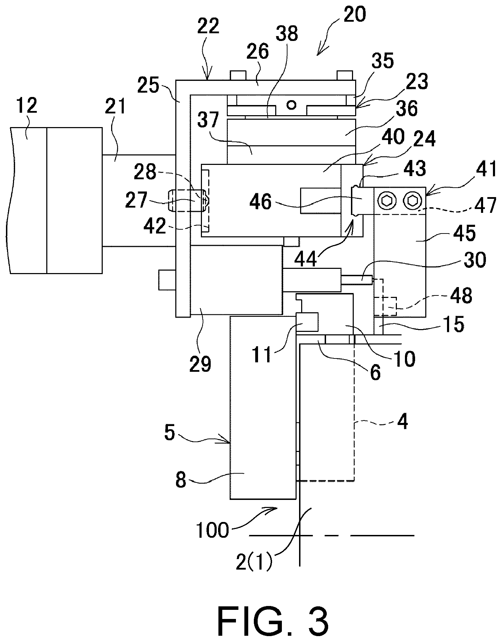

The bracket 22 has a longitudinal plate part 25 fixed orthogonally to the shaft part 21, and a lateral plate part 26 projecting forward from an upper end of the longitudinal plate part 25. As shown in Fig. 3, a plunger 27 is fixed on a center of the longitudinal plate part 25 to face forward. The plunger 27 has a pushing part 28 which is projected and urged forward. Below the plunger 27, a contact-type sensor 29 serving as a claw lock confirmation device is fixed to face forward. The sensor 29 has a contactor 30 projecting forward.

The compliance device 23 is configured to fit the hand part 24 to the robot arm 12, and is configured to allow relative displacement between the robot arm 12 and the hand part 24. The compliance device 23 comprises a body 35 fitted to a lower surface of the lateral plate part 26 of the bracket 22, a base 36 to which the hand part 24 is fitted through a bracket plate 37, and a compliance mechanism part 38 interposed between the body 35 and the base 36 so as to allow relative displacement between the body 35 and the base 36. The compliance mechanism part 38 comprises a return mechanism which returns the displaced body 35 and the base 36 to an original point position, and a compliance lock mechanism which restricts relative displacement between the body 35 and the base 36 at the original point position.

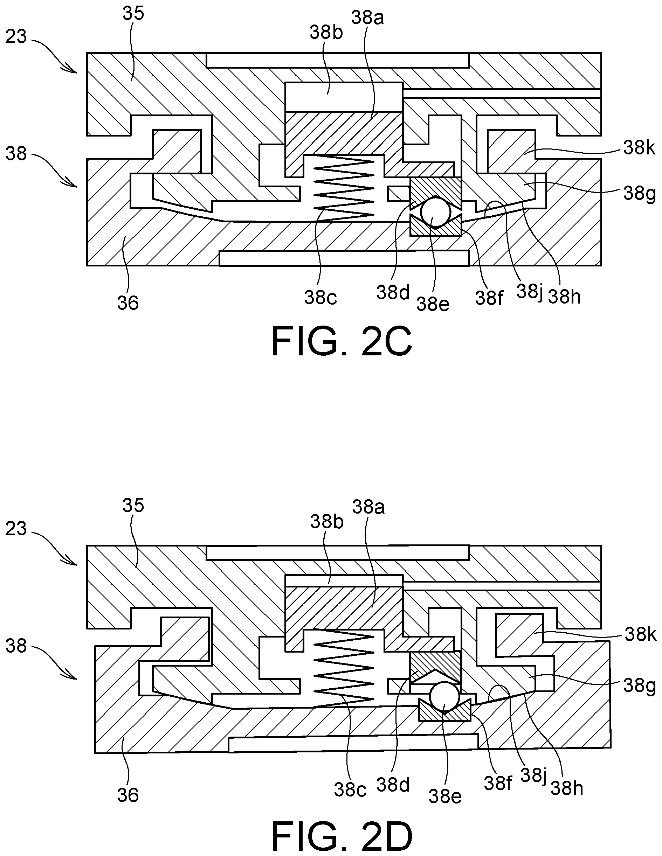

For example, the compliance device 23 may have a structure shown in Fig. 2C. The compliance mechanism part 38 shown in Fig. 2C includes a piston 38a interposed between the body 35 and the base 36, and a piston chamber 38b provided on one side of the piston 38a (the side of the body 35), to which a compressed fluid (e.g., compressed air) is supplied. The piston 38a is connected to the base 36 by a spring 38c. The piston 38a is provided with a first holding part 38d. A steel ball 38e is interposed between the first holding part 38d and the base 36. A second holding part 38f is provided between the steel ball 38e and the base 36, so that the steel ball 38e is held by the first holding part 38d and the second holding part 38f. In addition, the body 35 includes a body annular part 38g which is provided on an outer peripheral side with respect to the holding parts 38d, 38f and the steel ball 38e. The body annular part 38g includes a first abutment surface 38h provided on a lower part thereof. The base 36 includes a second abutment surface 38j capable of abutting on the first abutment surface 38h, and a base annular part 38k which is provided on the outer peripheral side with respect to the body annular part 38g.

In the locked state shown in Fig. 2C, a compressed fluid is supplied to the piston chamber 38b, so that the body annular part 38g is relatively moved upward to abut on the base annular part 38k from below. Thus, relative displacement between the body 35 and the base 36 is restricted. On the other hand, in the unlocked state shown in Fig. 2D, no compressed fluid is supplied to the piston chamber 38b, so that the body annular part 38g is relatively moved downward with respect to the base annular part 38k, whereby the body annular part 38g is spaced apart from the base annular part 38k. Thus, the body 35 and the base 36 can be allowed to be relatively displaced in a three-dimensional direction and a rotational direction about a center axis.

The hand part 24 comprises a main body 40 fixed to the bracket plate 37 to face forward, and a pair of right and left grasping claws 41, 41 provided on a front part of the main body 40. The hand part 24 is supported in suspension from the bracket 22 through the compliance device 23.

A circular recess 42 opposed to the plunger 27 is formed in a rear surface of the main body 40. Since the pushing part 28 of the plunger 27 abuts on a center of the circular recess 42, excessive swinging of the main body 40, which is supported in suspension by the compliance device 23, is restricted. A guide groove 43 extending in the right and left direction is formed in a front surface of the main body 40.

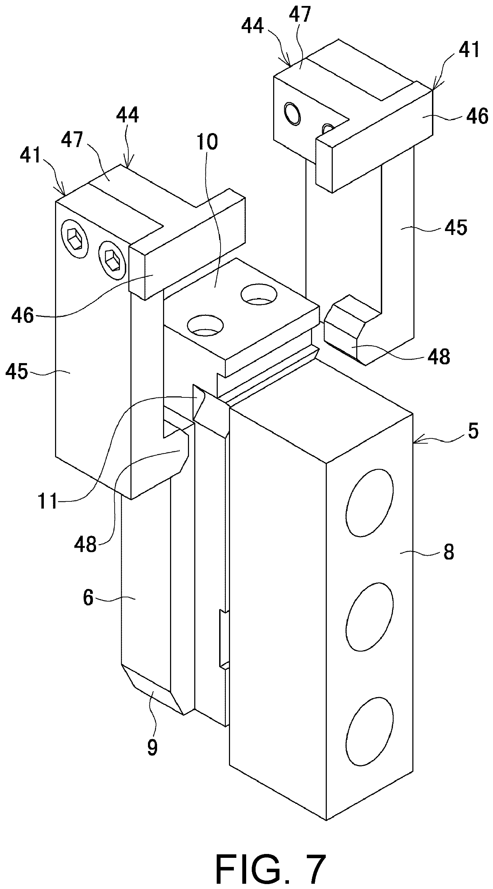

The grasping claw 41 is comprises a slide part 44 which is slidably connected to the main body 40, and a claw part 45 connected from the slide part 44 to face downward. As shown in Figs. 2A, 3 and 7, the slide part 44 includes a fit-in part 46 which is fitted in the guide groove 43 of the main body 40 and is provided on both right and left sides with respect to the plunger 27, and a support part 47 which projects forward from a center portion of the fit-in part 46. The slide part 44 is formed to have a T-shape in a plan view (see Fig. 2B). The right and left fit-in parts 46, 46 are synchronously slidable in opposite directions by a drive part 44a (see Fig. 2B) provided in the main body 40. As shown in Fig. 2B, for example, the drive part 44a includes a piston 44b which is pneumatically driven, and a pair of link mechanisms 44c which connect the piston 44b and the slide parts 44. Due to such a structure, by driving the drive part 44a, the slide parts 44, 44 can be slid in the opposite directions.

The claw parts 45 have a plate-like shape hanging downward. Upper ends of the claw parts 45 are connected to right and left outer surfaces of the support parts 47 of the slide parts 44. Each claw part 45 has a projection 48 at a position near a lower front end thereof, the projection 48 projecting toward its counterpart. A distal end of each projection 48 is formed to have a tapered shape such that a width in the up and down direction narrows toward the distal end. The claw parts 45, 45 can be opened and closed between a clamping position at which the projections 48, 48 are respectively inserted by sliding the slide parts 44, 44 to the recesses 11, 11 of the grasping block 10 of the base jaw 6 so as to sandwich the grasping block 10 from the right and left sides, and an unclamping position at which the projections 48, 48 are spaced apart from the right and left side surfaces of the grasping block 10 so as to be pulled out from the recesses 11, 11

In the machine tool 100 as structured above, when the claw 5 is detached from the chuck 1, as shown in Fig. 1, the chuck main body 2 is indexed to a rotation position at which the claw 5 to be removed is located at an upper position, and the lock mechanism 13 of the master jaw 3 is unlocked. At this time, the displacement member 15 is projected to the unlocked position.

Then, while the claws 45, 45 of the hand part 24 are located at the unclamping position, the hand for changing claws 20 is moved by the robot arm 12 to come close to the chuck main body 2 from the front, at a height in which the contactor 30 of the sensor 29 is positioned above the grasping block 10. At this time, as shown in Fig. 3, when the displacement member 15 is located at the unlocked position, the contactor 30 abuts on the displacement member 15. Thus, the unlocked state of the claw 5 can be confirmed by a detection signal from the sensor 29.

After the confirmation of the unlocked state, the hand for exchanging claws 20 is moved by the robot arm 12 to a height at which the claw parts 45, 45 are positioned forward outside the recesses 11, 11 of the grasping block 10, such that the projections 48, 48 of the claw parts 45, 45 are positioned outside the recesses 11,11.

Thereafter, by sliding the claw parts 45, 45 together with the slide parts 44 to the clamping position, as shown in Fig. 4, the projections 48, 48 are respectively engaged with the recesses 11, 11, so that the claw 5 can be grasped by the hand part 24. At this time, even when there is more or less error in relative positions in the up and down direction between the projection 48 and the recess 11, the error is absorbed by the tapered inclined surface of the recess 11 and the tapered inclined surface of the distal end of the projection 48. Thus, the projection 48 and the recess 11 can be smoothly engaged with each other.

Then, by moving upward the hand for exchanging claws 20 from here, the claw 5 can be pulled out upward from the fitting groove 4.

At this time, since the base 36 is displaced together with the hand part 24 with respect to the body 35 by the compliance mechanism part 38 of the compliance device 23 so as to correct a position, the base jaw 6 can be smoothly pulled out from the fitting groove 4. Then, the claw 5 is accommodated in a not-shown claw stocker by the robot arm 12, whereby the detachment is completed. In this manner, the claw 5 is detached from the fitting groove 4 provided in the chuck 1.

On the other hand, when the claw 5 is attached to (mounted on) the chuck 1, a claw 5 to be exchanged is taken out from the claw stocker by the robot arm 12.

Then, the claw 5 is transferred by the robot arm 12 to a position above the chuck main body 2. At this time, the compliance device 23 fixes the body 35 and the base 36 at the original point position by a compliance lock mechanism of the compliance mechanism part 38, so as to prevent loosening of the claw 5 which is being transferred.

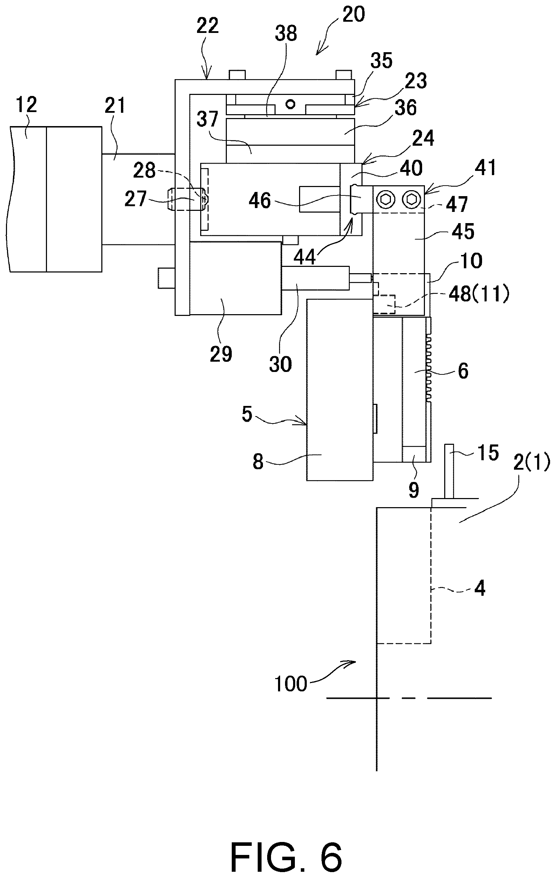

Next, as shown in Figs. 5 and 6, the claw 5 is positioned such that the base jaw 6 is located at a position above the fitting groove 4 along an extended line therefrom. Then, the fixed state of the body 35 and the base 36 of the compliance mechanism part 38 is released.

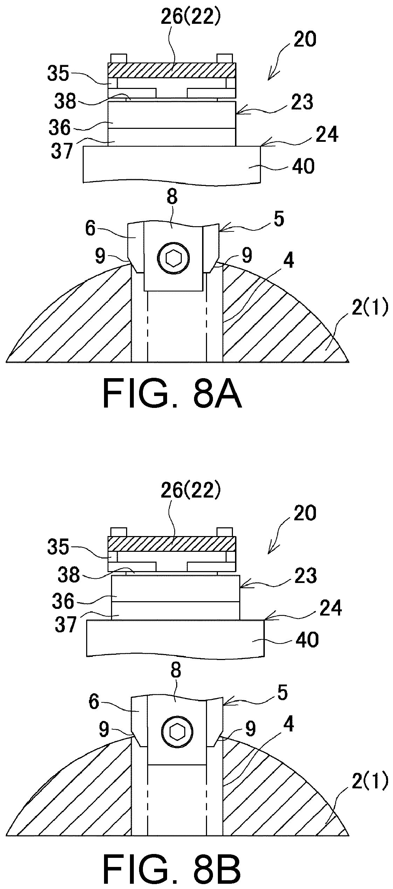

Under this state, by sliding the claw 5 downward by the hand for exchanging claws 20, the base jaw 6 is fitted in the upper opening (inlet) of the fitting groove 4. At this time, even when there is more or less error between the fitting groove 4 and the base jaw 6 in the right and left direction, as shown in Fig. 8A, a position in the right and left direction is corrected by the inclined surfaces 9, 9 provided on the lower end of the base jaw 6, so that the lower end of the base jaw 6 is introduced to the inlet of the fitting groove 4.

Following thereto, as shown in Fig. 8B, since the base 36 is displaced together with the hand part 24 with respect to the body 35 by the compliance mechanism part 38 of the compliance device 23 so as to correct a position, the base jaw 6 can be smoothly inserted to the fitting groove 4. After the base jaw 6 has been received in the fitting groove 4, the claw 5 is locked by the lock mechanism 13 of the master jaw 3.

Then, the claw parts 45, 45 of the hand part 24 are slid by the hand for exchanging claws 20 together with the slide parts 44 to the unclamping positions, so that the claw 5 is unclamped. After that, by moving upward the hand for exchanging claws 20, the hand part 24 is spaced apart from the chuck main body 2. In this manner, the claw 5 to be exchanged is fitted in the fitting groove 4 provided in the chuck 1 of the machine tool 100.

By repeating the aforementioned procedure by rotating the chuck main body 2 to sequentially index the fitting grooves 4, all the claws 5 can be exchanged.

According to the hand for exchanging claws 20, the method of automatically exchanging claws and the system for automatically exchanging claws 200 in the above embodiment 1, the claw 5 can be reliably attached and detached in accordance with change in surrounding environment, such as change in temperature and/or lowering of repeat accuracy of each device, due to the provision of the compliance device 23 which allows relative displacement between the robot arm 12 and the hand part 24, while it is fitted in the robot arm 12.

In particular, the hand part 24 is provided with the claw lock confirmation device (sensor 29) which confirms, when the claw 5 is detached from the fitting groove 4, the locked/unlocked state of the claw 5 by the lock mechanism 13 provided on the chuck 1. Thus, the risk of carrying out the detachment of the claw 5 while it is being locked can be avoided.

In addition, the lock mechanism 13 comprises the displacement member 15 which is displaced depending on the locked/unlocked state of the claw 5, and the claw lock confirmation device includes the sensor 29 which detects a position of the displacement member 15. Thus, the locked/unlocked state of the claw 5 can be easily confirmed by using the displacement member 15 of the lock mechanism 13.

Further, since the sensor 29 is of a contact type, the displacement of the displacement member 15 can be reliably detected. In particular, since the sensor 29 is provided on the hand part 24 fitted through the compliance device 23, even when the claw 5 to be contacted is off-balance, load on the sensor 29 can be decreased, whereby damage risk can be eliminated. Thus, a sensor having a distal end that is operated only in one direction can be used.

In addition to the aforementioned effect, according to the system for automatically exchanging claws 200 in the above embodiment 1, since the base jaw 6 is provided with the guide part (inclined surfaces 9, 9) which guide the claw 5 to the inlet of the fitting groove 4 when the claw 5 is inserted to the fitting groove 4, the claw 5 can be reliably guided to the inlet of the fitting groove 4 so as to achieve smooth attachment of the claw 5.

In the above embodiment 1, the grasping block 10 with the recesse 11 is integrally provided on the claw 5. However, recesses may be directly formed in side surfaces of the base jaw 6, by omitting the grasping block 10.

### [Embodiment 2]

Next, another embodiment of the present invention is described. Note that the same constituent part including the chuck 1 has the same reference numeral, and repeated description is omitted. In the embodiment 2, a back and forth orientation of the hand for exchanging claws 20 is specified based on the chuck main body 2.

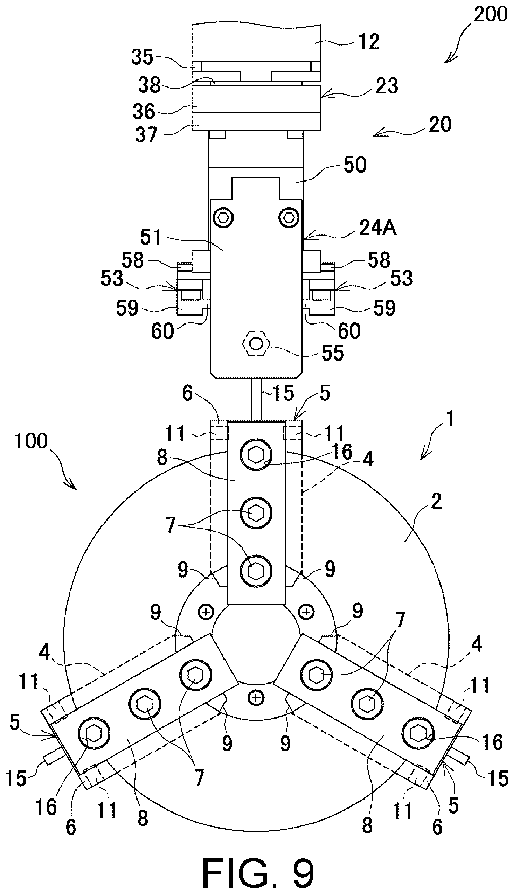

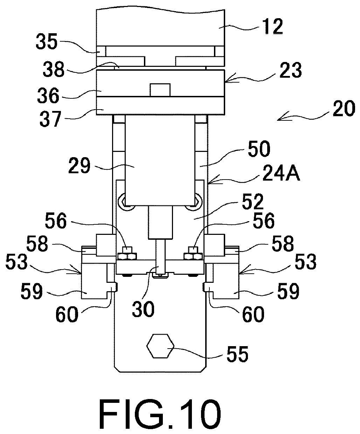

In the embodiment 1, the compliance device 23 is supported in suspension to face downward with respect to the robot arm 12 which faces forward, through the shaft part 21 and the bracket 22, and the hand part 24 is supported to face forward through the compliance device 23. On the other hand, in the embodiment 2, as shown in Figs. 9 and 10, the compliance device 23 is supported in suspension to face downward on a lower end of the robot arm 12 which faces downward, and a hand part 24A is supported to face downward through the compliance device 23.

The hand part 24A herein comprises a main body 50 fixed to the bracket plate 37 to face downward, a front support plate 51 provided on a front surface side of the main body 50, a rear support plate 52 provided on a rear surface side of the main body 50, and grasping claws 53, 53 provided on both right and left sides of the main body 50. The sensor 29 is fixed to face downward from the bracket plate 37 behind the rear support plate 52.

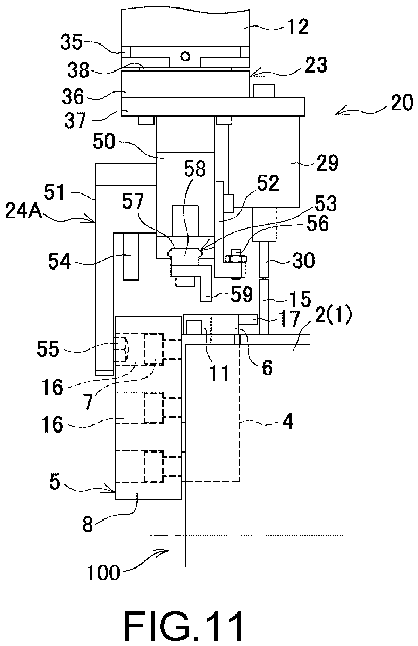

As shown in Fig. 11, the front support plate 51 has an upper end which is fixed to the front surface of the main body 50, and a lower end which extends in front of the main body 50 in parallel with the main body 50. Thus, the front support plate 51 has an inverted L-shape in a side view. A press rod 54 which faces downward to abut on the upper surface of the top jaw 8 is provided on a lower surface of the upper end of the front support plate 51. In addition, a rear surface of the lower end of the front support plate 51 is provided with a support guide 55 which abuts on the front surface of the top jaw 8.

The rear support plate 52 has an upper end which is fixed on the rear surface of the main body 50, and a lower end which extends rearward below the main body 50. Thus, the rear support plate 52 has an L-shape in a side view. A pair of right and left press bolts 56, 56, which abut on the upper surface of the base jaw 6 of the claw 5, are threadedly engaged with the lower end of the rear support plate 52 so as to face downward.

The grasping claws 53 comprise slide parts 58 respectively fitted in a pair of guide grooves 57 provided on the right and left sides of the main body 50 so as to be movable in the right and left direction from the side surfaces of the main body 50, and claw parts 59 fixed on the lower surfaces of the slide parts 58 to hang downward, the claw parts 59 having projections 60 on surfaces opposed to each other. The right and left slide parts 58 are synchronously slidable in opposite directions by a drive part 44a (see Fig. 2B) provided in the main body 50. Due to this sliding, the right and left claw parts 59, 59 can be opened and closed between a clamping position at which the projections 60, 60 are respectively inserted in recesses 11, 11 directly provided in the right and left side surfaces of the base jaw 6 so as to sandwich the base jaw 6 from the right and left sides, and an unclamping position at which the projections 60, 60 are spaced apart from the right and left sides of the base jaw 6 so as to be pulled out from the recesses 11, 11.

In the machine tool 100 as structured above, when the claw 5 is detached from the chuck 1, similarly to the embodiment 1, the chuck main body 2 is indexed to a rotation position at which the claw 5 to be removed is located at an upper position, and the lock mechanism 13 of the master jaw 3 is unlocked. At this time, the displacement member 15 is projected to the unlocked position.

Then, while the claw parts 59, 59 of the hand part 24A are located at the unclamping position, the hand for exchanging claws 20 is moved by the robot arm 12 to a position above the chuck main body 2, such that the contactor 30 of the sensor 29 is positioned directly above the displacement member 15 as shown in Fig. 11. At this time, although the support guide 55 of the front support plate 51 interferes with the front surface of the top jaw 8, the support guide 55 is moved into a bolt hole 16 with which the bolt 7 is to be threadedly engaged, whereby abutment can be avoided. Thus, rearward movement is allowed.

When the displacement member 15 is located at the unlocked position, the contactor 30 abuts on the displacement member 15. Thus, the unlocked state of the claw 5 can be confirmed by a detection signal from the sensor 29.

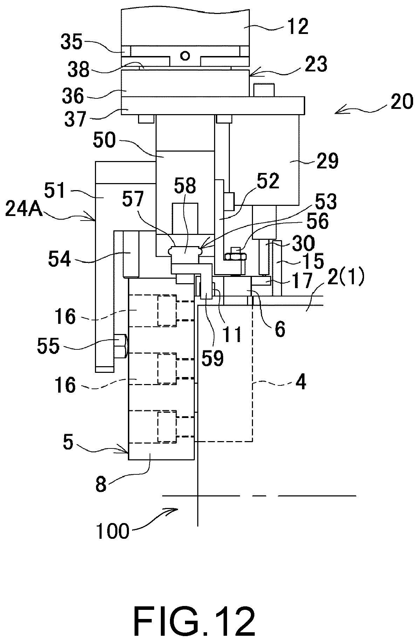

After the confirmation of the unlocked state, the hand for exchanging claws 20 is moved by the robot arm 12 forward and then downward. As shown in Fig. 12, the hand for exchanging claws 20 is stopped at a position in which the press rod 54 of the hand part 24A abuts on the upper surface of the top jaw 8, the press bolts 56, 56 abut on the upper surface of the base jaw 6, and the support guide 55 abuts on the front surface of the top jaw 8. In this case, an upper end of the base jaw 6 may be provided with an abutment piece 17 onto which the contactor 30 abuts so as to confirm a stop position.

Thereafter, by sliding the claw parts 59, 59 together with the slide parts 58 to the clamping position, the claw 5 can be grasped by the hand part 24A. By moving upward the hand for exchanging claws 20 from here, the claw 5 can be pulled upward from the fitting groove 4.

At this time, since the base 36 is displaced together with the hand part 24A with respect to the body 35 by the compliance mechanism part 38 of the compliance device 23 so as to correct a position, the base jaw 6 can be smoothly pulled out from the fitting groove 4. Then, the claw 5 is accommodated in a not-shown claw stocker by the robot arm 12, whereby the detachment is completed. In this manner, the claw 5 is detached from the fitting groove 4 provided in the chuck 1.

On the other hand, when the claw 5 is attached to (mounted on) the chuck 1, a claw 5 to be exchanged is taken out from the claw stocker by the robot arm 12.

Then, the claw 5 is transferred by the robot arm 12 to a position above the chuck main body 2. At this time, the compliance device 23 fixes the body 35 and the base 36 at the original point position by a compliance lock mechanism of the compliance mechanism part 38, so as to prevent loosening of the claw 5 which is being transferred.

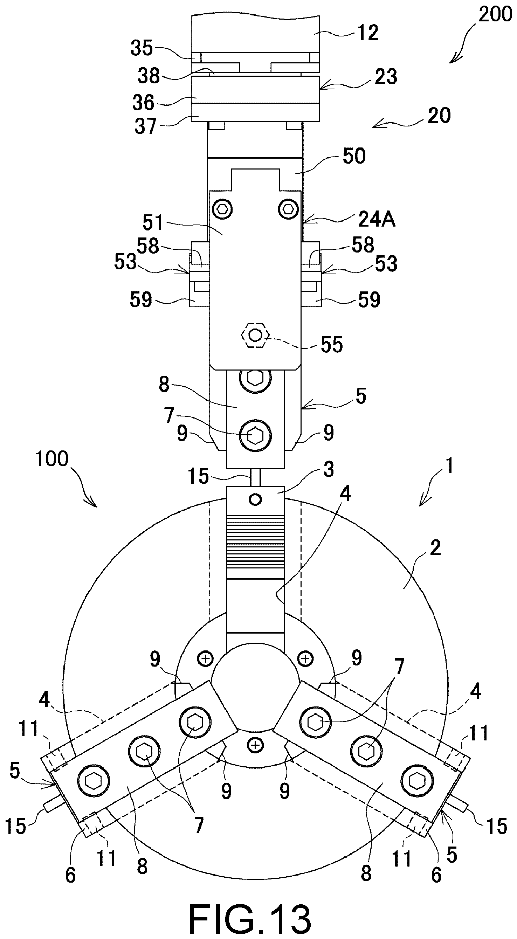

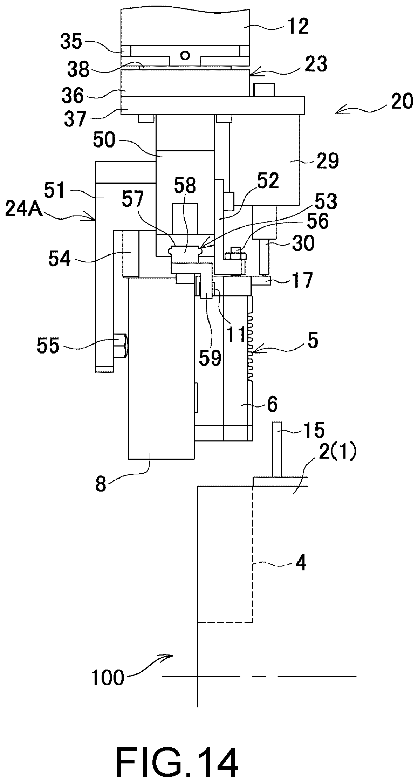

Next, as shown in Figs. 13 and 14, the claw 5 is positioned such that the base jaw 6 is located at a position above the fitting groove 4 along an extended line therefrom. Then, the fixed state of the body 35 and the base 36 of the compliance mechanism part 38 is released.

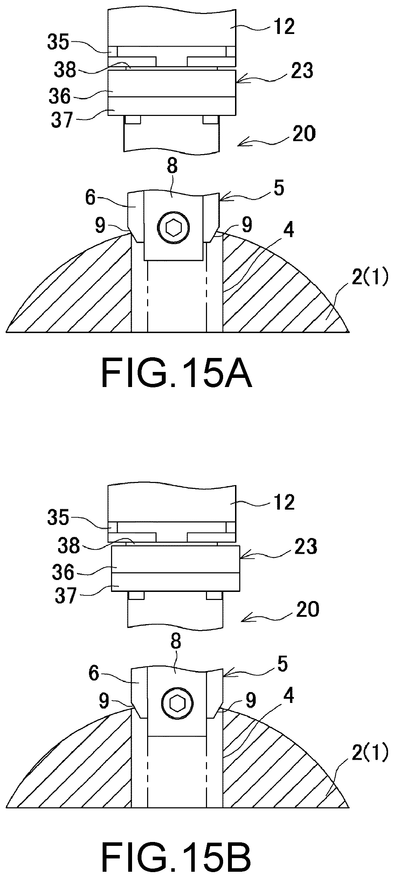

Under this state, by sliding the claw 5 downward by the hand for exchanging claws 20, the base jaw 6 is fitted in the upper opening (inlet) of the fitting groove 4. At this time, even when there is more or less error between the fitting groove 4 and the base jaw 6 in the right and left direction, as shown in Fig. 15A, a position in the right and left direction is corrected by the inclined surfaces 9, 9 provided on the lower end of the base jaw 6, so that the lower end of the base jaw 6 is introduced to the inlet of the fitting groove 4.

Following thereto, as shown in Fig. 15B, since the base 36 is displaced together with the hand part 24A with respect to the body 35 by the compliance mechanism part 38 of the compliance device 23 so as to correct a position, the base jaw 6 can be smoothly inserted to the fitting groove 4. After the base jaw 6 has been received in the fitting groove 4, the claw 5 is locked by the lock mechanism 13 of the master jaw 3.

Then, the claw parts 59, 59 of the hand part 24A are slid to the unclamping positions by the hand for exchanging claws 20, so that the claw 5 is unclamped. After that by moving upward the hand for exchanging claws 20, the hand part 24A is spaced apart from the chuck main body 2 so as to reach the state shown in Fig. 9. In this manner, the claw 5 to be exchanged is fitted in the fitting groove 4 provided in the chuck 1 of the machine tool 100.

By repeating the aforementioned procedure by rotating the chuck main body 2 to sequentially index the fitting grooves 4, all the claws 5 can be exchanged.

Also according to the hand for exchanging claws 20, the method of automatically exchanging claws and the system for automatically exchanging claws 200 in the above embodiment 2, the claw 5 can be reliably attached and detached in accordance with change in surrounding environment, such as change in temperature and/or lowering of repeat accuracy of each device, due to the provision of the compliance device 23 which allows relative displacement between the robot arm 12 and the hand part 24, while it is fitted in the robot arm 12. In addition, similarly to the embodiment 1, due to the provision of the claw lock confirmation device (sensor 29), the risk of carrying out the detachment of the claw 5 while it is being locked can be avoided.

Particularly herein, since the hand part 24A is provided with a positioning part composed of a first guide (support guide 55) which abuts on the claw 5 in the back and forth direction of the chuck 1 so as to position the claw 5 in the back and forth direction, and a second guide (press rod 54 and press bolts 56) which abuts on the claw 5 in the insertion direction to the fitting groove 4 so as to position the claw 5 in the insertion direction, the claw 5 is positioned in the two directions, whereby the posture of the claw 5 grasped by the hand part 24A can be made stable. Thus, the claws can be more smoothly exchanged. In addition, a grasping force by the hand part 24A can be reduced.

In the above embodiment 2, the one press rod 54 and the two press bolts 56, 56 are provided as the second guide on the front and back sides. However, the number and the shape of them are not limited thereto. The number of the press rod 54 and the number of the press bolt 56 may be respectively one or two. A plate like member or a block body may be employed instead of a rod and a bolt. The second guide is not limited to a front one and a back one, and only one of them may be provided. The first guide is also not limited to the one support guide 55. A plurality of support guides may be provided on the up and down sides and the right and left sides, and a shape thereof may be modified.

In addition, in the above embodiment 2, the recesse 11 to be grasped by the hand part 24A are provided in the side surfaces of the base jaw 6. However, the grasping block 10 as in the embodiment 1 may be used.

In both of the embodiments, the type of the sensor 29 of the claw lock confirmation device can be suitably modified. For example, a touch probe may be employed. It goes without saying that a contactless type sensor such as a proximity sensor can be used, in addition to a contact type sensor. In addition, not limited to a sensor, a micro switch may be used. Further, not limited to the displacement member 15, as long as the lock mechanism 13 has a structure that is displaced depending on the locked/unlocked state, the state can be confirmed by a sensor or the like.

Moreover, a case in which the sensor 29 is not used but a control unit of the chuck outputs a signal depending on the locked/unlocked state and the transfer device confirms the locked state based on the signal is included in the claw lock confirmation device.

In addition, in the above embodiments 1 and 2, the claw 5 (base jaw 6) has the inclined surfaces 9, 9 serving as the guide part, but the inlet of the fitting groove 4 may have inclined surfaces. Further, both the claw 5 and the inlet of the fitting groove 4 may have the inclined surfaces. Not limited to an inclined surface, a curved surface may be employed as the guide part.

Furthermore, the fitting groove 4 is indexed to the upper side and the claws 5 are exchanged. However, depending on a type of the transfer device, the claws 5 can be exchanged on the lateral side and the lower side of the chuck 1, in addition to the upper side thereof.

Moreover, although the detachment of the claw 5 from the chuck 1 and the attachment of the claw 5 to the chuck 1 are sequentially carried out one by one, it is also conceivable that all the claws 5 are removed from the chuck 1 by the robot arm 12 or the like, and that thereafter the claws 5 are attached in succession by the robot arm 12 or the like.

On the other hand, the transfer device is not limited to the robot arm 12, but may be an arm provided on a loader or an arm dedicated for exchange. A lathe turret (tool rest) may be used as the transfer device.

## Claims

1. A hand for exchanging claws of a chuck, the hand for exchanging claws being fitted to a transfer device so as to attach and detach a claw to and from a fitting groove provided in the chuck of a machine tool, the hand for exchanging claws comprising:
a hand part capable of grasping the claw; and
a compliance device that fits the hand part to the transfer device, and allows relative displacement between the transfer device and the hand part.

2. The hand for exchanging claws according to claim 1, further comprising a claw lock confirmation device that confirms a locked/unlocked state of the claw by a lock mechanism provided on the chuck, when the claw is detached from the fitting groove.

3. The hand for exchanging claws according to claim 2, wherein
the lock mechanism comprises a displacement member that is displaced depending on the locked/unlocked state of the claw, and
the claw lock confirmation device includes a sensor that detects a position of the displacement member.

4. The hand for exchanging claws according to claim 3, wherein
the sensor is of a contact type.

5. A method of automatically exchanging claws of a chuck comprising:
a step of fitting the hand for exchanging claws according to any of claims 1 to 4 to the transfer device, and
a step of attaching and detaching the claw to and from the fitting groove provided in the chuck of the machine tool.

6. A system for automatically exchanging claws of a chuck, comprising:
the hand for exchanging claws according to any of claims 1 to 4;
the chuck of the machine tool, the chuck being provided with the fitting groove; and
a transfer device to which the hand for exchanging claws is fitted, the transfer device being configured to put the claw in and out from the fitting groove;
wherein at least one of the fitting groove and the claw is provided with a guide part that guides the claw to an inlet of the fitting groove when the claw is inserted to the fitting groove.
